# EUROPEAN PATENT SPECIFICATION

(11) **EP 3 553 395 B1**
(45) Date of publication and mention of the grant of the patent: **30.08.2023**
(21) Application number: 19167824.2
(22) Date of filing: 08.04.2019
(51) Int. Cl.: F24D 3/10, F24D 19/10, F16K 27/00, F16K 31/04, G05D 23/19

(54) **ACTUATOR, HEATING CIRCUIT MANIFOLD, AND PROCEDURE FOR INSTALLING ACTUATOR IN HEATING CIRCUIT MANIFOLD**
STELLANTRIEB, HEIZKREISVERTEILER UND VERFAHREN ZUM INSTALLIEREN EINES STELLANTRIEBS IN EINEM HEIZKREISVERTEILER
ACTIONNEUR, COLLECTEUR DE CIRCUIT DE CHAUFFAGE ET PROCÉDURE D'INSTALLATION D'UN ACTIONNEUR DANS UN COLLECTEUR DE CIRCUIT DE CHAUFFAGE

(30) Priority: 11.04.2018 DE 102018108562
(43) Date of publication of application: 16.10.2019
(73) Proprietor: Johnson Electric International AG, 3280 Murten (CH)
(72) Inventor: Gassmann, Joerg, Shatin, N.T. (HK); Knaebel, Heiko, Shatin, N.T. (HK)
(74) Representative: Hocking, Adrian Niall

(56) References cited:
- EP-A1- 2 871 420
- EP-A1- 3 067 628
- DE-A1- 19 931 340
- DE-A1-102009 046 618

## Description

### FIELD OF THE INVENTION

The invention concerns an actuator that steers a valve in a heating circuit manifold and the heating circuit manifold itself. Further, the invention concerns a procedure for installing one such actuator in a heating circuit manifold.

### BACKGROUND OF THE INVENTION

Heating circuit manifolds are used to distribute heat to floor or wall heating systems. For this purpose, a fitted thermostat with a temperature sensor in the affected room transmits an electric signal to the corresponding servomotor that then opens or closes its valve in the heating circuit manifold.

Often used are electrical or electrothermal actuators. Electrothermal actuators consist of an expansion body through which an electric current is passed affecting its expanding or contracting behaviour and therefore the position of the valve. This mechanism, however, needs time, making the distribution of heat a sluggish process. Higher valve actuation speeds can be achieved with servomotors. In this case, an electric signal is sent to a motor that opens or closes the affected valve via gearing.

EP 2 894 408 A1 discloses a heating circuit manifold fitted with valves for each of the heating circuits. Each of these valves is switched with its own electric actuator. A voltage is applied across the motor, e.g. a stepper motor, that then actuates and changes the valve position. When no voltage is applied, the valve remains at one of its end positions, i.e. it is either open or closed. The actuators are signalled one after the other because the disclosed heating circuit manifold always applies voltage across no more than one of the actuators, requiring therefore less energy reserves.

Alternatively, servomotors may also be linked directly to a control unit via a bus system. This bus, e.g. CAN (Controlled Area Network), actuates the motor that then opens or closes the valve via gearing. The current valve position can then be translated into data that are then communicated to the closed loop controller.

According to the state of the art, DE 10 2010 047 913 A1 described an intelligent heating circuit manifold and a procedure for operating this. For the purpose of optimising the heating performance and increasing efficiency, the described heating circuit manifold is fitted with a CPU for improved control valve actuation. A bus link between the heating system and the heating circuit manifold in conjunction with an intelligent control program serves to enhance the control efficiency, even under external effects like e.g. heat input from direct sunlight. An example of an actuator for steering a valve in heating circuit manifold is provided in EP 3 067 628 A1.

On the other hand, the state of the art involves connecting directly a separate cable from each of the actuators to the closed loop controller. Although solutions based on a bus system permit cables from each of the actuators in lieu of direct connections, the large number of actuators needed in a number of systems demands that one such standard cable be fitted with a wide range of connectors. Connecting each actuator to its cable is therefore complex work.

### SUMMARY OF THE INVENTION

The purpose of the invention is to provide a device and a procedure that accelerate and simplify the installation of actuators in heating circuit manifolds.

Specifically, the solution takes the form of an actuator steering a valve in a heating circuit manifold and consisting of an electric motor with housing and a motor flange which motor flange is arranged to be fitted in the motor receiver of the heating circuit manifold, a valve switching element connected to this electric motor and moved by this in the axial direction, a motor electronics element mounted on the electric motor's housing, a contact plug mounted on this motor electronics element, and a contact socket mounted on this motor electronics element and matching a contact plug of the same type as this contact plug.

Here, the contact plug is aligned in a first direction, and the contact socket in a second. The contact plug and the contact socket match to such an extent that the contact socket can mate with an identical contact plug. In other words, the contact socket and the contact plug are mates. The contact plug and the contact socket feature electric conductors for connection to an adjacent actuator taking these connections. The preferred second direction is counter to the first.

In the sense of the invention, a motor electronics element is a printed circuit board (PCB) or other board mounted on an electronic circuit, preferably an integrated circuit. The actuators connected to the contact plug and the contact socket can transmit and therefore exchange data via these contacts.

In the sense of the invention, a contact plug, or plug, designates a connector whose contact pins point outwards. A contact plug also includes components that, as constituents of a plug type connector, match a contact socket to such an extent that they make the connection between the contact plug and the contact socket. The connection made can then exchange electric power and electric signals, specifically data via a bus system, between the contact plug and the contact socket. In the sense of the invention, a contact socket designates any component that is the constituent of a plug type connector whose contact openings point inwards or that mates with a contact plug.

The actuator is fitted with a valve switching element actuated by the electric motor. This valve switching element is linked to the valve in such a manner that the former's movement serves to open or close the latter. The valve switching element may take the form, for example, of a motor shaft. In other words, a valve switching element is a component that is connected to and actuated by the electric motor and can be linked to a valve in such a manner that the electric motor can exert a force on the valve switching element and therefore the valve, thereby opening or closing it.

The contact plug and the contact socket are aligned in two opposing directions. Preferably, the first and second directions should be colinear.

An advantage is presented when the plane touching the end of the plug at 90° to the first direction lies outside of the housing or the whole actuator. This plane therefore does not intersect the housing. An advantage is also presented when the end of the contact socket touches a plane lying at 90° to both the first and second directions and outside of the housing.

Variant 1 of the contact socket presents on its base a horizontal tie connecting the base ends of two identical, vertical, parallel side walls. The side of the contact socket facing away from the motor electronics element, i.e. the front of the side walls and of the tie forming the base side, is U shaped.

One such actuator requires a vertical movement to be fitted. In the process, a motor flange mounted on the actuator engages from above into a motor receiver in the heating circuit manifold. At the same time, the contact plug slips into a U shaped contact socket on an adjacent actuator.

Alternatively, Variant 2 of a contact socket presents as its base a horizontal tie arranged at the base end of and connected to a vertical side wall and a horizontal locating extension on the top side of this tie and parallel to the side wall. This alternative variant, therefore, presents only one vertical side wall connected to a tie, whereby the fronts of the side wall and the tie forming the base are L shaped. In addition, a locating extension is arranged above the tie on the side facing away from the side wall.

An actuator featuring an alternative, i.e. L shaped, contact socket requires for its fitting an initial vertical movement that engages it from above in the motor receiver in the heating circuit manifold, followed by a rotary movement that slides the contact plug over the locating extension before engaging it in the contact socket on an adjacent actuator.

A fitting variant 2 is possible for an actuator featuring one such alternative contact socket, whereby it is fitted vertically without rotary movement, analogously to the actuator with U shaped contact socket.

A connecting element that may also be designed as a motor flange is secured rigidly to the actuator in such a manner that when connected to the heating circuit manifold this element forms a mechanical link between the electric motor and the manifold. In other words, the connected element is arranged between the electric motor and the heating circuit manifold and simplifies the actuator's installation in this. Specifically, its geometry supports the actuator's precise positioning for the optimal electric contacts.

Further, the solution takes the form of a heating circuit manifold that steers valves with at least two actuators. Each of these actuators present the following: an electric motor with housing, a valve switching element connected to this electric motor and moved by this in the axial direction, a motor electronics element mounted on the electric motor's housing, a contact plug mounted on this microelectronics element, and a contact socket mounted on this microelectronics element and matching a contact plug of the same type as this contact plug.

At the same time, the arrangement of the actuators installed in the heating circuit manifold is such that the contact plug on one of two adjacent actuators can be connected electrically to the contact socket on the other. The two adjacent actuators can then be interconnected between the contact plug on the one actuator and the contact socket on the other.

An advantage is presented when the installed actuators each feature a contact plug and contact socket aligned in opposite directions. Preferably, the two directions are colinear. Alternatively, the two directions may run in parallel.

Preferably, two or more of the actuators are linked to a closed loop controller via a bus. The signals to open and close the valves are sent by the closed loop controller to the heating circuit manifold, and therefore to the actuators.

An advantage is presented when wireless data transmission between each of the actuators is implemented via one contact plug and one contact socket.

Wireless communication is in the sense of the invention when implemented without conducting cables. The particular characteristics here of a conducting cable, i.e. a single or multiple core bundle of separate conductors sheathed in insulating materials, are its flexibility and its elongated form.

Further, the solution also takes the form of a procedure for contacting more than one actuator according to the invention within a heating circuit manifold. This involves the following steps for each of the actuators: moving the actuator vertically towards the heating circuit manifold to effect a mechanical link between the actuator and the heating circuit manifold, positioning the actuator in the final fitting direction to effects its electronic contacting.

The electrical links between each of the actuators is set up according to the concept in the form of a sequential arrangement.

Variant 1 of the actuator's electronic contacting takes the form of a simultaneous mechanical link effected by a linear movement of the actuator. Preferably, this movement is vertical.

Alternatively, electronic contacting is effected by a rotary movement of the actuator about a vertical axis passing through it. This electronic contacting variant involves positioning the actuator in the final fitting direction following its initial mechanical link to the heating circuit manifold.

According to the concept, the actuator according to the invention presents an electric motor and a valve switching element for steering a valve. A motor electronics element with a contact plug and a matching contact socket is mounted on the actuator in such a manner that the contact plug on one of two adjacent actuators installed in a heating circuit manifold can be connected electrically to the contact socket on the other. At the same time, a mechanical link from two adjacent actuators to the heating circuit manifold safeguards the simultaneous electronic contacting between these two. The contact plug and the contact socket on the actuators are arranged in such a manner that, after the precise positioning of the actuators, the contact plug on the one actuator engages in the contact socket of the other, adjacent one. Hence, the procedure for positioning the actuators accelerates and simplifies installation and contacting without additional cabling.

An advantage may lie in the faster installation of drives in a group of drives. Subsequent cable connections are unnecessary, and the result is considerable time savings, specifically for a large number of actuators. Moreover, fewer cables mean lower costs.

When the actuators are installed at defined intervals, each of these can be connected directly via its integrated contact system.

For example, actuators are to be installed on valves cascaded at 50 mm intervals in heating circuit manifolds. The actuators can be interconnected quickly and easily when they are fitted with a contact on both sides of the motor. The lines needed for all actuators, e.g. for the power supply and bus, may simply be looped through.

The electrical connections to the bus and supply voltage are effected at the data and supply line input on the contact socket and at the data and supply line output on the contact plug fitted to all actuators.

There are a number of bus systems suitable for this application. Also a field bus can be used in lieu of a CAN bus system. One possible version effects the link between the actuators and the closed loop controller via a Local Interconnect Network system (LIN bus). This space saving solution also reduces the number of links to the closed loop controller. An alternative uses PROFIBUS.

An advantage is presented when the actuators can be contacted directly to each other because they are installed in the heating circuit manifold at small intervals to the scale of 50 mm.

One great advantage of the invention lies in the simple installation of the actuator, which effects the electrical contacting as soon as the actuators have been positioned precisely. The installation work and costs are then reduced.

Moreover, there will be improvements to the actuator's look, or visual impression.

The actuators can be adapted easily to various heating circuit manifold systems. For example, the connecting elements to each of the systems can be matched, and the interchangeability of the connecting elements, also designated as motor flange, then accelerates the actuator's adaptation to a particular heat circuit manifold system.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labeled with a same reference numeral in all the figures in which they appear. Dimensions of components and features shown in the figures are generally chosen for convenience and clarity of presentation and are not necessarily shown to scale.
Fig 1A: a heating circuit manifold with actuators fitted vertically,
Fig 1B: a heating circuit manifold with actuators fitted via rotation,
Fig 2A: an actuator with a U shaped socket,
Fig 3A: an actuator with a U shaped socket and open motor electronics element,
Fig 3B: an actuator with an alternative socket,
Fig 4A: two actuators with a U shaped socket,
Fig 4B: two actuators with an alternative socket,
Fig 5A: a top view schematic of two installed actuators with a U shaped socket, and
Fig 5B: a top view schematic of two installed actuators with an alternative socket.

### DETAILED DESCRIPTION OF THE PREFERRED EMBODIMENTS

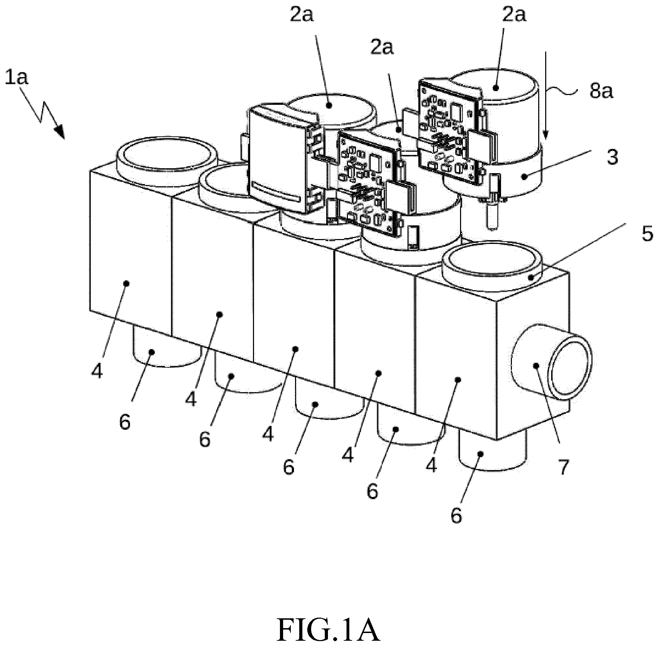

Fig 1A depicts an example heating circuit manifold 1a. Installed in this heating circuit manifold 1a are a number of actuators 2a, each attached via a motor flange 3 above a valve 4 to the heating circuit manifold 1a. The solution takes the form of an actuator 2a steering a valve 4 in a heating circuit manifold 1a and including of an electric motor 9 with housing 9a, a valve switching element 10 connected to this electric motor and moved by this in the axial direction, a motor electronics element 11 mounted on the electric motor's housing, a contact plug 12 mounted on this motor electronics element, and a contact socket 13a on this motor electronics element and matching a contact plug of the same type as this contact plug.

Here, the motor flange 3 is fitted in a motor receiver 5 arranged at the top end of each valve. Hence, the motor 9 is secured mechanically above the valve 4, and therefore the whole actuator 2a is connected mechanically to the heating circuit manifold 1a. Each valve 4 is assigned a hot water OUT that supplies a section of the heating circuit, e.g. a particular room. The valve 4 regulates the flow through the hot water OUT 6 assigned to valve 4. The distribution of the available hot water is therefore regulated in that it is supplied through a hot water IN 7 to the heating circuit manifold. In Variant 1 of the heating circuit manifold 1a, the actuators 2a are fitted vertically upwards in the heating circuit manifold 1a, i.e. they are installed in the direction 8a. The motor flange 3 is secured rigidly to the actuator 2a in such a manner that when connected to the heating circuit manifold 1a this element forms a rigid mechanical link between the electric motor 9 and the manifold 1a. In other words, the motor flange 3 is arranged between the electric motor 9 and the heating circuit manifold 1a and simplifies the actuator's installation in this. Specifically, its geometry supports the actuator's precise positioning for the optimal electric contacts.

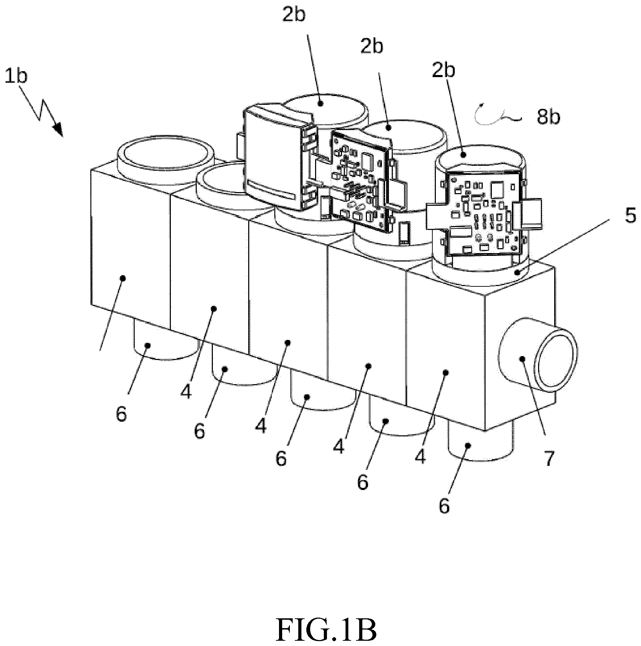

Variant 2 of a heating circuit manifold 1b is depicted in Fig 1B. Each of the alternative actuators 2b is inserted from above into its motor receiver 5, but unlike the actuators 2b are aligned at an angle. A following rotary movement towards the final fitting direction 8b then turns the actuator 2b after which it is secured mechanically. This variant first aligns the actuators 2b in parallel after the final rotary movement. Additional securing may also take the form of a bayonet catch or other locking component, e.g. clip or cap nut. In this variant too, the fitted actuators 2b steer the valves 4 to regulate the flow through the hot water OUTs 6 supplied to the heating circuit manifold 1b from a single hot water IN 7.

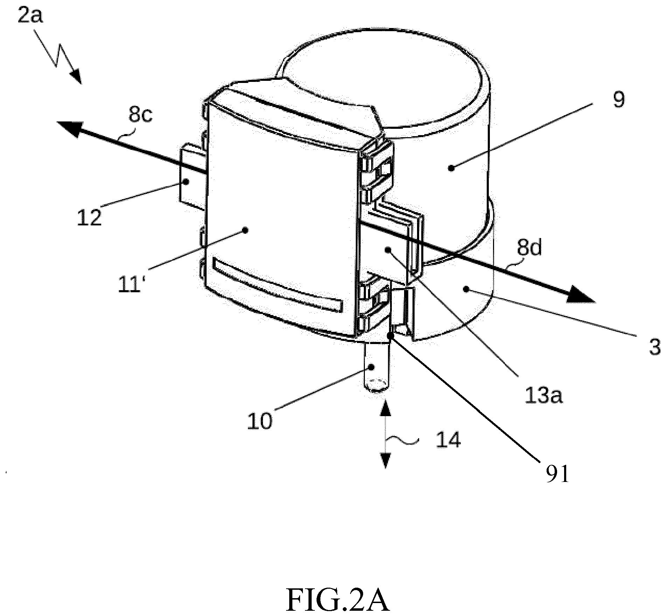

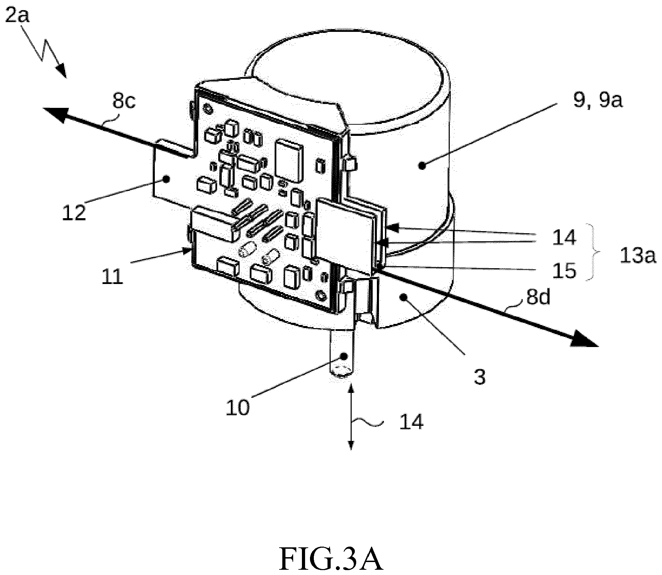

Figs 2A and 3A present an actuator 2a for vertical installation in a heating circuit manifold 1a depicted in Fig 1A. The actuator 2a includes a motor 9 and an valve switching element 10 which is connected to the motor 9 and movable along an axial direction of the motor 9. The motor 9 includes a housing 9a and a motor shaft 91. The motor 9 is arranged above the motor flange 2 and is fixedly connected to the motor flange 2 by the housing 9a. The motor shaft 91 is set at the base end of the actuator 2a. This valve switching element 10 is linked to the valve 4 in such a manner that the former's movement serves to open or close the latter. The valve switching element 10 may take the form, for example, of a motor shaft 91. In other words, a valve switching element 10 is a component that is connected to and actuated by the electric motor and can be linked to a valve 4 in such a manner that the electric motor can exert a force on the valve switching element 10 and therefore the valve, thereby opening or closing it.

Fig 2A depicts a motor electronics element 11' for steering the electric motor 9, here under a cover. A motor electronics element 11 without cover is depicted in Fig 3A. The motor electronics element 11 is arranged on one side of the actuator 2a, i.e. the motor is fitted with its own local control electronics. On one side, the motor electronics element 11 presents a contact plug 12. In the sense of the invention, a motor electronics element 11 is a printed circuit board (PCB) or other board mounted on an electronic circuit, preferably an integrated circuit. The actuators connected to the contact plug and the contact socket can transmit and therefore exchange data via these contacts. The contact plug 12 and its side facing away from the motor electronics element 11, i.e. the end of the contact plug 12, points in a direction 8c, designated also the first direction here. Fitted on a second side of the motor electronic elements 11 opposite the first is a U shaped contact socket 13a receiving the actuator 2a fitted vertically. The U shaped contact socket 13a consists of two side walls arranged vertically and in parallel and connected at their bases with a horizontal tie 15. The side of the contact socket 13a facing away from the motor electronics element 11, i.e. the end of the contact socket 13a, is aligned in a second direction 8d. The second direction 8d is counter to the first direction 8c. The contact plug 12 and the contact socket 13a are aligned in two opposing directions. Preferably, the first and second directions should be collinear. Further, both the contact plug and the contact socket are arranged off centre in this example. A plane passing at right angles to the first and second directions 8c and 8d and touching one of the ends of the contact plug or contact socket extends completely outside of the actuators 2a. An advantage is presented when the plane touching the end of the plug at 90° to the first direction lies outside of the housing or the whole actuator. This plane therefore does not intersect the housing. An advantage is also presented when the end of the contact socket touches a plane lying at 90° to both the first and second directions and outside of the housing. Thus can two adjoining, identical actuators 2a be connected via the contact plug 12 on the one actuator 2a and the contact socket 13a on the other actuator 2a. This effects automatically the contacts between an actuator 2a and its adjacent actuator 2a when they are fitted, at the same time positioning the actuator 2a in its final location. In one embodiment, the contact plug is aligned in the one direction, and the contact socket in a second. The contact plug 12 and the contact socket 13a match to such an extent that the contact socket 13a can mate with an identical contact plug 12. In other words, the contact socket 13a and the contact plug 12 are mates. The contact plug 12 and the contact socket feature electric conductors for connection to an adjacent actuator 2a taking these connections. The preferred second direction is counter to the first. In the sense of the invention, a contact plug, or plug, designates a connector whose contact pins point outwards. A contact plug 12 also includes components that, as constituents of a plug type connector, match a contact socket to such an extent that they make the connection between the contact plug 12 and the contact socket 13a. The connection made can then exchange electric power and electric signals, specifically data via a bus system, between the contact plug 12 and the contact socket 13a. In the sense of the invention, a contact socket 13a designates any component that is the constituent of a plug type connector whose contact openings point inwards or that mates with a contact plug 12.

One such actuator 2a requires a vertical movement to be fitted. In the process, a motor flange 3 mounted on the actuator 2a engages from above into a motor receiver 5 in the heating circuit manifold 1a. At the same time, the contact plug 12 slips into a U shaped contact socket 13a on an adjacent actuator 2b.

Arranged beneath the motor 9, the motor shaft 91 executes a vertical movement along its axis 17, opening or closing thereby the corresponding valve 4 in the heating circuit manifold 1a (both depicted in Fig 1A).

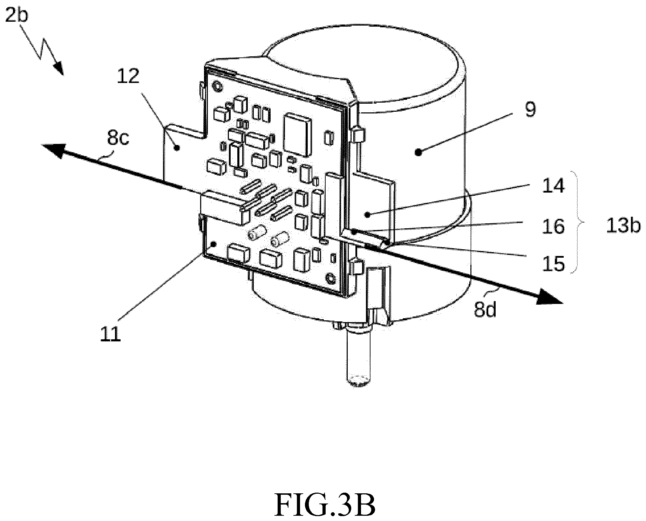

An alternative actuator 2b designed to be fitted with a final rotary movement is depicted in Fig 3B. Here too, the motor electronics element 11 is arranged on one side of the motor 9 for the actuator 2b, and a contact plug 12 and a contact socket 13b on the two opposite sides of the motor electronics element 11, analogously to variant 1 with the actuators 2a. In this alternative variant, however, the contact socket 13b is configured in a manner differing from variant 1. Unlike the U shaped variant, depicted in Figs 2A and 3A, the socket here consists only of one vertical side wall 14 and a horizontal tie 15. This tie 15 is arranged at the base of the side wall 14, enclosing it at an angle of 90°. The top side of the tie 15, on the side facing away from the side wall 14, is fitted with a snap hook 16. This snap hook is suitable for securing in the contact socket 13b a contact plug 12 on another actuator 2b. Alternatively, Variant 2 of a contact socket 13a presents as its base a horizontal tie arranged at the base end of and connected to a vertical side wall 14 and a horizontal locating extension 16 on the top side of this tie and parallel to the side wall. This alternative variant, therefore, presents only one vertical side wall connected to a tie, whereby the fronts of the side wall 14 and the tie 15 forming the base are L shaped. In addition, a locating extension 16 is arranged above the tie on the side facing away from the side wall 14. In one embodiment, the locating extension 16 is elastic. An actuator 2a featuring an alternative, i.e. L shaped, contact socket 13a requires for its fitting an initial vertical movement that engages it from above in the motor receiver 5 in the heating circuit manifold 1a, followed by a rotary movement that slides the contact plug 13a over the locating extension 16 before engaging it in the contact socket on an adjacent actuator 2b. A fitting variant 2 is possible for an actuator featuring one such alternative contact socket, whereby it is fitted vertically without rotary movement, analogously to the actuator with U shaped contact socket.

In this example too, the contact plug 12 is aligned in the one direction 8c, and the contact socket 13b in a second. The two directions 8c and 8d run counter to each other. In this variant, the two directions 8c and 8d are colinear.

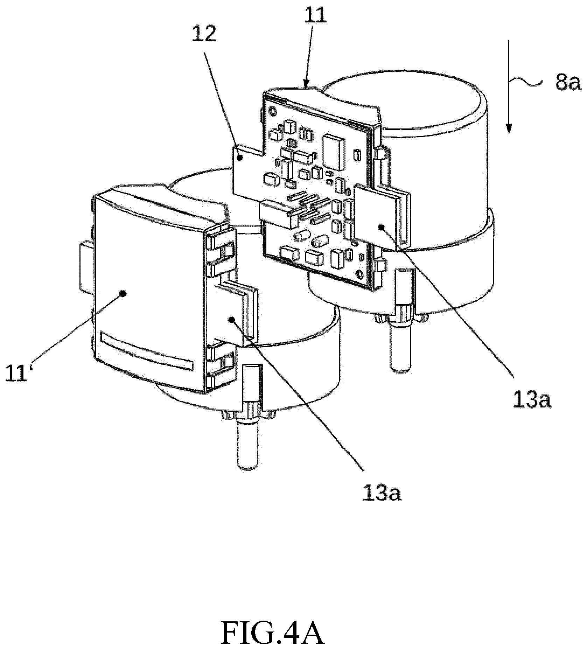

Fig 4A presents two actuators 2a for fitting in a heating circuit manifold 1a depicted in Fig 1A. The solution takes the form of a heating circuit manifold 1a that steers valves 4 with at least two actuators. Each of these actuators present the following: an electric motor 9 with housing 9a, a valve switching element 10 connected to this electric motor 9 and moved by this in the axial direction, a motor electronics element 11 mounted on the electric motor's housing, a contact plug 12 mounted on this microelectronics element, and a contact socket 13a mounted on this microelectronics element and matching a contact plug 13a of the same type as this contact plug 12. At the same time, the arrangement of the actuators installed in the heating circuit manifold 1a is such that the contact plug 12 on one of two adjacent actuators can be connected electrically to the contact socket 13a on the other. The two adjacent actuators can then be interconnected between the contact plug on the one actuator and the contact socket on the other.

The two actuators 2a depicted are offset, and are to be arranged next to each other after fitting in the heating circuit manifold 1a. The actuator 2a depicted on the left is fitted with a motor electronics element 11' under a cover, whereas the motor electronics element 11 of the second actuator 2a, depicted here on the right, is without cover. The actuator 2a is fitted by being moved vertically along its direction 8a so that the contact plug 12 engages from above in the opposite contact socket 13a on the adjacent actuator 2a. The vertical fitting of the actuator 2a here effects automatically the contacts between the motor of the one actuator 2a and that of the adjacent actuator 2a. The contact socket 13a of the one actuator 2a, depicted here on the left, then encloses on more than one side the contact plug 12 on the adjacent actuator 2a, depicted here on the right. Once fitted, the actuator is secured in position e.g. with catches or interlocks in the form of an additional clip or cap nut. This also secures in position the electric contacts because the actuator 2a has already been secured in the motor receiver 5 as depicted in Fig 1A. An advantage is presented when the installed actuators each feature a contact plug and contact socket aligned in opposite directions. Preferably, the two directions are colinear. Alternatively, the two directions may run in parallel. Two or more of the actuators are linked to a closed loop controller via a bus. The signals to open and close the valves are sent by the closed loop controller to the heating circuit manifold, and therefore to the actuators. An advantage is presented when wireless data transmission between each of the actuators is implemented via one contact plug and one contact socket. Wireless communication is in the sense of the invention when implemented without conducting cables. The particular characteristics here of a conducting cable, i.e. a single or multiple core bundle of separate conductors sheathed in insulating materials, are its flexibility and its elongated form.

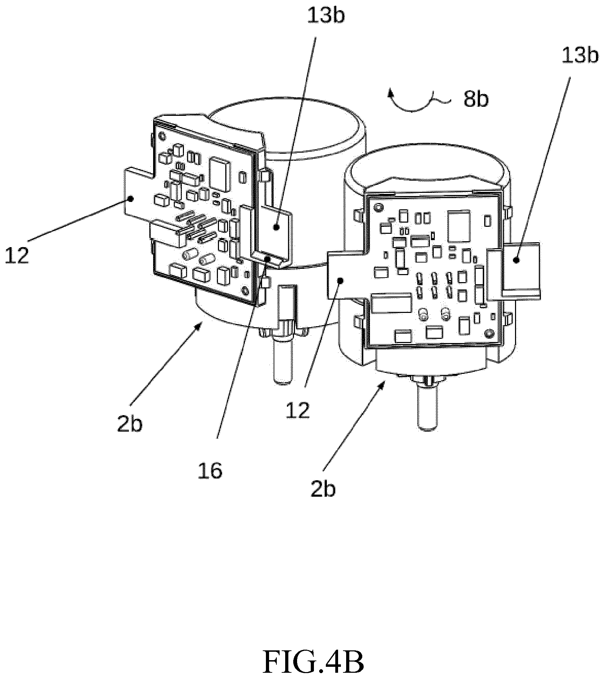

Two actuators 2b with alternative contact sockets 13b are depicted in Fig 4B. Here, the two actuators 2b are not offset in height, but positioned next to each other. However, the actuators 2b are rotated through an angle relative to each other and are not arranged in parallel. A rotary movement of the actuator 2b turns the contact plug 12 towards the final fitting direction 8b to the contact socket 13b. The contact plug 12 then slides over the angled side of the snap hook 16 and engages in the contact socket 13b. The contact plug 12 is engaged in such a manner in the contact socket 13b that the latter encloses the former on more than one side. Unlike the variant with the U shaped contact socket 13b, however, the snap hook 16 flanks only the one vertical side of the contact plug 12. In other words, the side of the contact plug facing the snap hook 16 is not contained within a side wall 14 of the contact socket 13b, but only by the snap hook 16.

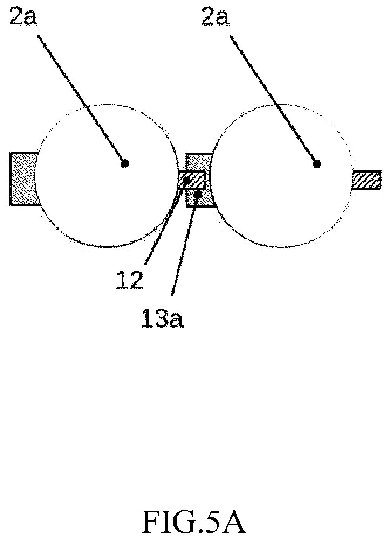

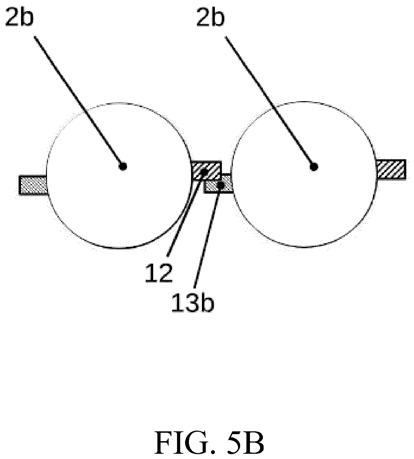

Figs 5A and 5B each present a top view schematic of two fitted actuators, 2a and 2b respectively. In Fig 5A, the contact plug 12 is enclosed on more than one side by the U shaped contact socket 13a. In contrast, the alternative variant depicted in Fig 5B presents a contact plug 12 lying against the one side wall 14 of the contact socket 13b.

The solution also takes the form of a procedure for contacting more than one actuator 2a according to the invention within a heating circuit manifold 1a. This involves the following steps for each of the actuators: moving the actuator 2a vertically towards the heating circuit manifold 1a to effect a mechanical link between the actuator 2a and the heating circuit manifold 1a, positioning the actuator 2a in the final fitting direction to effects its electronic contacting. The electrical links between each of the actuators is set up according to the concept in the form of a sequential arrangement.

Variant 1 of the actuator's electronic contacting takes the form of a simultaneous mechanical link effected by a linear movement of the actuator. Preferably, this movement is vertical.

Alternatively, electronic contacting is effected by a rotary movement of the actuator about a vertical axis passing through it. This electronic contacting variant involves positioning the actuator in the final fitting direction following its initial mechanical link to the heating circuit manifold.

According to the concept, the actuator 2a according to the invention presents an electric motor 9 and a valve switching element 10 for steering a valve 4. A motor electronics element 11 with a contact plug 12 and a matching contact socket 13a is mounted on the actuator 2a in such a manner that the contact plug 12 on one of two adjacent actuators installed in a heating circuit manifold 1a can be connected electrically to the contact socket 13a on the other. At the same time, a mechanical link from two adjacent actuators 2a, 2b to the heating circuit manifold 1a safeguards the simultaneous electronic contacting between these two. The contact plug 12 and the contact socket 13a on the actuators are arranged in such a manner that, after the precise positioning of the actuators, the contact plug 12 on the one actuator engages in the contact socket 13a of the other, adjacent one. Hence, the procedure for positioning the actuators accelerates and simplifies installation and contacting without additional cabling.

An advantage may lie in the faster installation of drives in a group of drives. Subsequent cable connections are unnecessary, and the result is considerable time savings, specifically for a large number of actuators. Moreover, fewer cables mean lower costs.

When the actuators are installed at defined intervals, each of these can be connected directly via its integrated contact system.

For example, actuators 2a, 2b are to be installed on valves 4 cascaded at 50 mm intervals in heating circuit manifolds 1a. The actuators 2a, 2b can be interconnected quickly and easily when they are fitted with a contact on both sides of the motor. The lines needed for all actuators, e.g. for the power supply and bus, may simply be looped through.

The electrical connections to the bus and supply voltage are effected at the data and supply line input on the contact socket and at the data and supply line output on the contact plug fitted to all actuators.

There are a number of bus systems suitable for this application. Also a field bus can be used in lieu of a CAN bus system. One possible version effects the link between the actuators and the closed loop controller via a Local Interconnect Network system (LIN bus). This space saving solution also reduces the number of links to the closed loop controller. An alternative uses PROFIBUS.

An advantage is presented when the actuators 2a, 2b can be contacted directly to each other because they are installed in the heating circuit manifold 1a at small intervals to the scale of 50 mm.

One great advantage of the invention lies in the simple installation of the actuator, which effects the electrical contacting as soon as the actuators have been positioned precisely. The installation work and costs are then reduced.

Moreover, there will be improvements to the actuator's look, or visual impression.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. Actuator (2a, 2b) for steering a valve (4) in a heating circuit manifold (1a, 1b) having a motor receiver (5), the actuator (2a, 2b) comprising an electric motor (9) with housing (9a) and a motor flange which motor flange is arranged to be fitted in the motor receiver (5) of the heating circuit manifold (1a, 1b), a valve switching element (10) connected to this electric motor (9) and moved by this in an axial direction, a motor electronics element (11), a contact plug (12) mounted on this motor electronics element (11), and a contact socket (13a, 13b) mounted on this motor electronics element (11) and matching a contact plug of the same type as this contact plug (12), wherein the contact plug (12) is aligned in a first direction and the contact socket (13a, 13b) in a second direction, and whereby the contact plug (12) and the contact socket (13a, 13b) are fitted with electric conductors for an electrical connection to an adjacent, identical actuator (2a, 2b), **characterised in that** the motor electronics element (44) is mounted on the electric motor's housing,

2. Actuator (2a, 2b) according to Claim 1, **characterised in that** the first and second directions are colinear.

3. Actuator (2a, 2b) according to one of the Claims 1 to 2, **characterised in that** a plane passing at 90° through the first direction and touching the end of the plug (12) extends completely outside of the housing (9a).

4. Actuator (2a, 2b) according to one of the Claims 1 to 3, **characterised in that** a plane passing at 90° through the second direction and touching the end of the socket (13a, 13b) extends completely outside of the housing (9a).

5. Actuator (2a, 2b) according to one of the Claims 1 to 4, **characterised in that** the contact socket (13a) presents on its base a horizontal tie (15) connecting the base ends of two identical, vertical, parallel side walls (14).

6. Actuator (2a, 2b) according to one of the Claims 1 to 4, **characterised in that** the contact socket (13b) presents as its base a horizontal tie (15) arranged at the base end of and connected to a vertical side wall (14) and a horizontal locating extension (16) on the top side of this tie (15) and parallel to the side wall (14).

7. Actuator (2a, 2b) according to one of the Claims 1 to 6, **characterised in that** the motor flange (3) is secured rigidly to the actuator (2a, 2b) in such a manner that when connected to the motor receiver (5) of the heating circuit manifold (1a, 1b) the motor flange (3) forms a mechanical link between the electric motor (9) and the heating circuit manifold (1a, 1b).

8. Heating circuit manifold (1a, 1b) for steering valves with at least two actuators (2a, 2b) according to one of the claims 1-7, the heating circuit manifold (1a, 1b) having at least two motor receivers (5) via which the at least two actuators (2a, 2b) are respectively attached, and **characterised in that** the arrangement of the actuators (2a, 2b) installed in the heating circuit manifold (1a, 1b) is such that the contact plug (12) on one of two adjacent actuators (2a, 2b) can be connected electrically to the contact socket (13a, 13b) on the other adjacent actuator (2a, 2b).

9. Heating circuit manifold (1a, 1b) according to Claim 8, **characterised in that** the installed actuators (2a, 2b) each feature the contact plug (12) and the contact socket (13a, 13b) aligned in opposite directions.

10. Heating circuit manifold (1a, 1b) according to Claim 8 or 9, **characterised in that** data can be transferred through the connection between a socket plug (12) on one actuator (2a, 2b) and a contact socket (13a, 13b) on an another, adjacent actuator (2a, 2b).

11. Heating circuit manifold (1a, 1b) according to one of the Claims 8 to 10, **characterised in that** two actuators (2a, 2b) are connected to a closed loop controller via a bus link.

12. Heating circuit manifold (1a, 1b) according to one of the Claims 8 to 11, **characterised in that** data can be transferred wirelessly between two of the installed actuators (2a, 2b) via the contact plug (12) on the one actuator (2a, 2b) and the contact socket (13a, 13b) on the other actuator (2a, 2b).

13. Procedure for contacting more than one actuator (2a, 2b) according to one of the Claims 1 to 7 within a heating circuit manifold (1a, 1b), **characterised in that** the following steps are taken for each of the actuators (2a, 2b): moving the actuator (2a, 2b) vertically towards the heating circuit manifold (1a, 1b) to effect a mechanical link between the actuator (2a, 2b) and the heating circuit manifold (1a, 1b), and positioning the actuator (2a, 2b) in the final fitting direction (8a, 8b) to effects its electronic contacting.

14. Procedure according to Claim 13, **characterised in that** a vertical linear movement (8a) of the actuator (2a) effects at the same time its electronic contacting and its mechanical link.

15. Procedure according to Claim 13, **characterised in that** the electronic contacting of the actuator (2b) is effected by a rotary movement of the actuator (2b) towards the final fitting direction (8b) about a vertical axis passing through the actuator (2b).

## Patentansprüche

1. Stellantrieb (2a, 2b) zum Steuern eines Ventils (4) in einem Heizkreisverteiler (1a, 1b) mit einer Motoraufnahme (5), wobei der Stellantrieb (2a, 2b) einen Elektromotor (9) mit Gehäuse (9a) und einem Motorflansch, wobei der Motorflansch so angeordnet ist, dass er in die Motoraufnahme (5) des Heizkreisverteilers (1a, 1b) eingepasst wird, ein Ventilschaltelement (10), das mit diesem Elektromotor (9) verbunden ist und durch diesen in einer Achsrichtung bewegt wird, ein Motorelektronikelement (11), einen Kontaktstecker (12), der an diesem Motorelektronikelement (11) montiert ist, und eine Kontaktbuchse (13a, 13b), die an diesem Motorelektronikelement (11) montiert ist und zu einem Kontaktstecker derselben Art wie dieser Kontaktstecker (12) passt, umfasst, wobei der Kontaktstecker (12) in einer ersten Richtung und die Kontaktbuchse (13a, 13b) in einer zweiten Richtung ausgerichtet ist und wodurch der Kontaktstecker (12) und die Kontaktbuchse (13a, 13b) mit elektrischen Leitern für eine elektrische Verbindung mit einem benachbarten, identischen Stellantrieb (2a, 2b) versehen sind, **dadurch gekennzeichnet, dass** das Motorelektronikelement (44) am Gehäuse des Elektromotors montiert ist.

2. Stellantrieb (2a, 2b) nach Anspruch 1, **dadurch gekennzeichnet, dass** die erste und zweite Richtung kollinear sind.

3. Stellantrieb (2a, 2b) nach einem der Ansprüche 1 bis 2, **dadurch gekennzeichnet, dass** eine Ebene, die 90° zu der ersten Richtung liegt und das Ende des Steckers (12) berührt, sich vollständig außerhalb des Gehäuses (9a) erstreckt.

4. Stellantrieb (2a, 2b) nach einem der Ansprüche 1 bis 3, **dadurch gekennzeichnet, dass** eine Ebene, die 90° zu der zweiten Richtung liegt und das Ende der Buchse(13a, 13b) berührt, sich vollständig außerhalb des Gehäuses (9a) erstreckt.

5. Stellantrieb (2a, 2b) nach einem der Ansprüche 1 bis 4, **dadurch gekennzeichnet, dass** die Kontaktbuchse (13a) an ihrer Basis eine horizontale Verbindung (15) aufweist, die die Basisenden von zwei identischen, vertikalen, parallelen Seitenwänden (14) verbindet.

6. Stellantrieb (2a, 2b) nach einem der Ansprüche 1 bis 4, **dadurch gekennzeichnet, dass** die Kontaktbuchse (13b) an ihrer Basis eine horizontale Verbindung (15), die an dem Basisende einer vertikalen Seitenwand (14) angeordnet und mit diesem verbunden ist, und einen horizontalen Positionierungsfortsatz (16) an der oberen Seite dieser Verbindung (15) und parallel zu der Seitenwand (14) aufweist.

7. Stellantrieb (2a, 2b) nach einem der Ansprüche 1 bis 6, **dadurch gekennzeichnet, dass** der Motorflansch (3) derart starr an dem Stellantrieb (2a, 2b) fixiert ist, dass, wenn er mit der Motoraufnahme (5) des Heizkreisverteilers (1a, 1b) verbunden ist, der Motorflansch (3) eine mechanische Verbindung zwischen dem Elektromotor (9) und dem Heizkreisverteiler (1a, 1b) bildet.

8. Heizkreisverteiler (1a, 1b) für Lenkungsventile mit mindestens zwei Stellantrieben (2a, 2b) nach einem der Ansprüche 1-7, wobei der Heizkreisverteiler (1a, 1b) mindestens zwei Motoraufnahmen (5) aufweist, über welche die mindestens zwei Stellantriebe (2a, 2b) jeweils befestigt sind, und **dadurch gekennzeichnet, dass** die Anordnung der Stellantriebe (2a, 2b), die in dem Heizkreisverteiler (1a, 1b) installiert sind, derart ist, dass der Kontaktstecker (12) an einem vom zwei benachbarten Stellantrieben (2a, 2b) elektrisch mit der Kontaktbuchse (13a, 13b) an dem anderen benachbarten Stellantrieb (2a, 2b) verbunden werden kann.

9. Heizkreisverteiler (1a, 1b) nach Anspruch 8, **dadurch gekennzeichnet, dass** die installierten Stellantriebe (2a, 2b) jeweils den Kontaktstecker (12) und die Kontaktbuchse (13a, 13b) aufweisen, die in entgegengesetzte Richtungen ausgerichtet sind.

10. Heizkreisverteiler (1a, 1b) nach Anspruch 8 oder 9, **dadurch gekennzeichnet, dass** Daten durch die Verbindung zwischen einem Buchsenstecker (12) an einem Stellantrieb (2a, 2b) und einer Kontaktbuchse (13a, 13b) an einem anderen, benachbarten Stellantrieb (2a, 2b) übertragen werden können.

11. Heizkreisverteiler (1a, 1b) nach einem der Ansprüche 8 bis 10, **dadurch gekennzeichnet, dass** zwei Stellantriebe (2a, 2b) mit einem geschlossenen Regelkreis über eine Busverbindung verbunden sind.

12. Heizkreisverteiler (1a, 1b) nach einem der Ansprüche 8 bis 11, **dadurch gekennzeichnet, dass** Daten drahtlos zwischen zwei der installierten Stellantriebe (2a, 2b) über den Kontaktstecker (12) an dem einen Stellantrieb (2a, 2b) und der Kontaktbuchse (13a, 13b) an dem anderen Stellantrieb (2a, 2b) übertragen werden können.

13. Verfahren zum Kontaktieren mehr als eines Stellantriebs (2a, 2b) nach einem der Ansprüche 1 bis 7 in einem Heizkreisverteiler (1a, 1b), **dadurch gekennzeichnet, dass** die folgenden Schritte für jeden der Stellantriebe (2a, 2b) durchgeführt werden: Bewegen des Stellantriebs (2a, 2b) vertikal zu dem Heizkreisverteiler (1a, 1b), um eine mechanische Verbindung zwischen dem Stellantrieb (2a, 2b) und dem Heizkreisverteiler (1a, 1b) zu erwirken, und Positionieren des Stellantriebs (2a, 2b) in der abschließenden Passrichtung (8a, 8b), um seine elektrische Kontaktierung zu erwirken.

14. Verfahren nach Anspruch 13, **dadurch gekennzeichnet, dass** eine vertikale lineare Bewegung (8a) des Stellantriebs (2a) gleichzeitig sein elektronisches Kontaktieren und seine mechanische Verbindung erwirkt.

15. Verfahren nach Anspruch 13, **dadurch gekennzeichnet, dass** das elektronische Kontaktieren des Stellantriebs (2b) durch eine Drehbewegung des Stellantriebs (2b) in die abschließende Passrichtung (8b) um eine vertikale Achse erwirkt wird, die durch den Stellantrieb (2b) verläuft.

## Revendications

1. Actionneur (2a, 2b) pour commander une vanne (4) dans un collecteur de circuit de chauffage (1a, 1b) présentant un récepteur de moteur (5), l'actionneur (2a, 2b) comprenant un moteur électrique (9) avec un boîtier (9a) et une bride de moteur, laquelle bride de moteur est conçue pour être montée dans le récepteur de moteur (5) du collecteur de circuit de chauffage (1a, 1b), un élément de commutation de vanne (10) relié à ce moteur électrique (9) et déplacé par celui-ci dans une direction axiale, un élément électronique de moteur (11), une fiche de contact (12) montée sur cet élément électronique de moteur (11), et une prise de contact (13a, 13b) montée sur cet élément électronique de moteur (11) et correspondant à une fiche de contact du même type que cette fiche de contact (12), dans laquelle la fiche de contact (12) est alignée dans une première direction et la prise de contact (13a, 13b) dans une deuxième direction, et dans laquelle la fiche de contact (12) et la prise de contact (13a, 13b) sont équipées de conducteurs électriques pour une connexion électrique à un actionneur adjacent identique (2a, 2b), **caractérisé en ce que** l'élément électronique de moteur (44) est monté sur le carter du moteur électrique,

2. Actionneur (2a, 2b) selon la revendication 1 ,**caractérisé en ce que** la première et la seconde directions sont colinéaires.

3. Actionneur (2a, 2b) selon l'une des revendications 1 à 2, **caractérisé en ce qu'**un plan passant à 90° par la première direction et touchant l'extrémité de la fiche (12) s'étend complètement à l'extérieur du boîtier (9a).

4. Actionneur (2a, 2b) selon l'une des revendications 1 à 3, **caractérisé en ce qu'**un plan passant à 90° par la seconde direction et touchant l'extrémité de la prise (13a, 13b) s'étend complètement à l'extérieur du boîtier (9a).

5. Actionneur (2a, 2b) selon l'une des revendications 1 à 4, **caractérisé en ce que** la prise de contact (13a) présente à sa base un lien horizontal (15) reliant les extrémités de base de deux parois latérales (14) identiques, verticales et parallèles.

6. Actionneur (2a, 2b) selon l'une des revendications 1 à 4, **caractérisé en ce que** la prise de contact (13b) présente à sa base un lien horizontal (15) agencé à l'extrémité de base d'une paroi latérale verticale (14) et reliée à celle-ci, et une extension de positionnement horizontale (16) située sur la face supérieure de ce lien (15) et parallèle à la paroi latérale (14).

7. Actionneur (2a, 2b) selon l'une des revendications 1 à 6, **caractérisé en ce que** la bride de moteur (3) est fixée rigidement à l'actionneur (2a, 2b) de telle manière que, lorsqu'elle est connectée au récepteur moteur (5) du collecteur de circuit de chauffage (1a, 1b), la bride de moteur (3) forme un lien mécanique entre le moteur électrique (9) et le collecteur de circuit de chauffage (1a, 1b).

8. Collecteur de circuit de chauffage (1a, 1b) pour vannes de direction avec au moins deux actionneurs (2a, 2b) selon l'une des revendications 1-7, le collecteur de circuit de chauffage (1a, 1b) présentant au moins deux récepteurs de moteur (5) par lesquels les au moins deux actionneurs (2a, 2b) sont respectivement attachés, et **caractérisé en ce que** la disposition des actionneurs (2a, 2b) installés dans le collecteur de circuit de chauffage (1a, 1b) est telle que la fiche de contact (12) sur l'un des deux actionneurs adjacents (2a, 2b) peut être connectée électriquement à la prise de contact (13a, 13b) sur l'autre actionneur adjacent (2a, 2b).

9. Collecteur de circuit de chauffage (1a, 1b) selon la revendication 8, **caractérisé en ce que** les actionneurs installés (2a, 2b) présentent chacun la fiche de contact (12) et la prise de contact (13a, 13b) alignées dans des directions opposées.

10. Collecteur de circuit de chauffage (1a, 1b) selon la revendication 8 ou 9, **caractérisé en ce que** des données peuvent être transférées par la connexion entre une fiche de contact (12) sur un actionneur (2a, 2b) et une prise de contact (13a, 13b) sur un autre actionneur adjacent (2a, 2b).

11. Collecteur de circuit de chauffage (1a, 1b) selon l'une des revendications 8 à 10, **caractérisé en ce que** deux actionneurs (2a, 2b) sont connectés à un contrôleur en boucle fermée via une liaison bus.

12. Collecteur de circuit de chauffage (1a, 1b) selon l'une des revendications 8 à 11, **caractérisé en ce que** les données peuvent être transférées sans fil entre deux des actionneurs installés (2a, 2b) par l'intermédiaire de la fiche de contact (12) sur l'un des actionneurs (2a, 2b) et de la prise de contact (13a, 13b) sur l'autre actionneur (2a, 2b).

13. Procédé de mise en contact de plusieurs actionneurs (2a, 2b) selon l'une des revendications 1 à 7 au sein d'un collecteur de circuit de chauffage (1a, 1b), **caractérisé en ce que** les étapes suivantes sont réalisées pour chacun des actionneurs (2a, 2b) : déplacement de l'actionneur (2a, 2b) verticalement vers le collecteur de circuit de chauffage (1a, 1b) pour réaliser une liaison mécanique entre l'actionneur (2a, 2b) et le collecteur de circuit de chauffage (1a, 1b), et positionnement de l'actionneur (2a, 2b) dans la direction finale de montage (8a, 8b) pour réaliser sa mise en contact électronique.

14. Procédé selon la revendication 13, **caractérisé en ce qu'**un mouvement linéaire vertical (8a) de l'actionneur (2a) agit à la fois sur son contact électronique et sur sa liaison mécanique

15. Procédé selon la revendication 13, **caractérisé en ce que** la mise en contact électronique de l'actionneur (2b) est effectuée par un mouvement rotatif de l'actionneur (2b) vers la direction finale de montage (8b) autour d'un axe vertical passant par l'actionneur (2b).
